(19) Europäisches Patentamt
European Patent Office
Office européen des brevets

(11) **EP 3 956 911 B1**

(12) **EUROPÄISCHE PATENTSCHRIFT**

(45) Veröffentlichungstag und Bekanntmachung des Hinweises auf die Patenterteilung:
**03.12.2025   Patentblatt 2025/49**

(21) Anmeldenummer: **20719937.3**

(22) Anmeldetag: **09.04.2020**

(51) Internationale Patentklassifikation (IPC):
*H01G 4/18* (2006.01)     *H01G 4/20* (2006.01)
*H01G 4/32* (2006.01)     *H01G 4/12* (2006.01)

(52) Gemeinsame Patentklassifikation (CPC):
**H01G 4/18; H01G 4/206; H01G 4/32;** H01G 4/1218;
H01G 4/1236

(86) Internationale Anmeldenummer:
**PCT/EP2020/000082**

(87) Internationale Veröffentlichungsnummer:
**WO 2020/211975 (22.10.2020 Gazette 2020/43)**

(54) **FOLIENKONDENSATOR MIT ERHÖHTER KAPAZITÄT**

FOIL CAPACITOR WITH HIGH CAPACITY

CONDENSATEUR À COUCHES AYANT UNE HAUTE CAPACITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.04.2019   DE 102019002801**

(43) Veröffentlichungstag der Anmeldung:
**23.02.2022   Patentblatt 2022/08**

(73) Patentinhaber: **Giesecke+Devrient Currency Technology GmbH**
**81677 München (DE)**

(72) Erfinder: **MAYER, Karlheinz**
**88167 Grünenbach (DE)**

(74) Vertreter: **Giesecke+Devrient IP**
**Prinzregentenstraße 161**
**81677 München (DE)**

(56) Entgegenhaltungen:
EP-A1- 3 016 120     US-A- 3 855 507
US-A- 3 906 600     US-A1- 2007 159 767

**Beschreibung**

Die Erfindung betrifft einen Folienkondensator aus einer ersten und einer zweiten Folie, wobei beide Folien jeweils eine relative Permittivität $\varepsilon_r$ aufweisen und mit Metallschichten beschichtet bzw. bedampft sind. Die Erfindung betrifft weiterhin ein Verfahren zur Herstellung eines derartigen Folienkondensators.

Aus dem Stand der Technik bekannte Folienkondensatoren für energietechnische Anwendungen bestehen zumeist aus zwei übereinander gelegten und aufgewickelten, jeweils auf einer Seite bzw. Oberfläche metallisierten Folien, dem sogenannten Wickel. Die beiden Folien werden etwas axial versetzt zueinander aufgewickelt, sodass auf jeder Stirnseite des Wickels die Metallschicht der etwas weiter vorstehenden Folie durch das sogenannte Schoopieren kontaktiert werden kann. Zusammen wirkt der so erzeugte Kondensator als aufgerollter Plattenkondensator. Die Kapazität C eines Plattenkondensators berechnet sich bekanntlich nach der Formel:

$$C = \varepsilon_0 \varepsilon_r \cdot \frac{A}{d}$$

mit der elektrischen Feldkonstante $\varepsilon_0$ des Vakuums, der relativen Permittivität $\varepsilon_r$ (Dielektrizitätszahl) des Folienmaterials, der Fläche A der Metallschicht bzw. Plattenfläche und dem Abstand d der beiden Metallschichten voneinander. Der Abstand d entspricht hierbei im Wesentlichen der Dicke des verwendeten Folienmaterials.

Die Parameter, die die Kapazität C bestimmen, sind somit die relative Permittivität $\varepsilon_r$ und die Dicke d des verwendeten Folienmaterials. Die Dicke d ist dabei auf die am Markt erhältlichen Materialien und in der Wickeltechnik bearbeitbaren Stärken von ca. 3 μm bis 12 μm begrenzt.

Als Folien-Materialien werden beispielsweise die folgende Kunststoffe verwendet, die eine relative Permittivität $\varepsilon_r$ von ca. 2,2 bis 3,3 aufweisen: Polyethylen (PE), Polyetylenterephthalat (PET), Polyethylennaphthalat (PEN), Polypropylen (PP), Polytetraflourethylen (PTFE), Polystyrol (PS), Polycarbonat (PC).

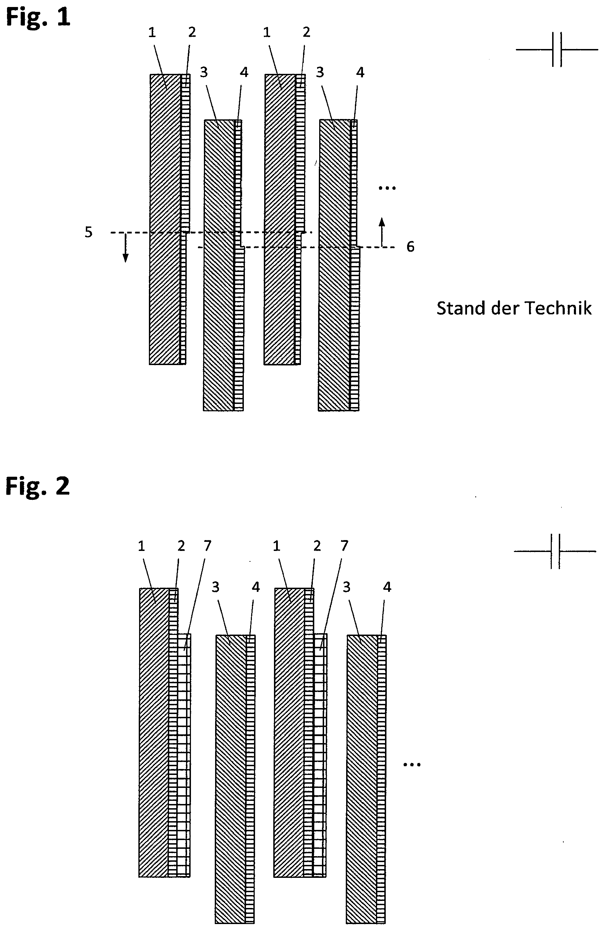

Der übliche Aufbau eines Folienkondensators besteht gemäß Fig. 1 aus zwei Folien 1 und 3, die jeweils auf einer Seite mit einer Metallschicht 2 bzw. 4 beschichtet bzw. bedampft sind. Folie 1 und Metallschicht 2 und Folie 3 und Metallschicht 4 bilden zusammen den Kondensator-Wickel. Die beiden Folien werden versetzt zueinander übereinander angeordnet und aufgewickelt. Fig. 1 sowie allen anderen Figuren zeigen dabei einen Ausschnitt eines Schnittbilds senkrecht bzw. quer zur Wickelrichtung eines Folien-Wickels und hierbei zwei von links nach rechts übereinandergeschichtete Wicklungen der beiden Folien. Außerhalb des Ausschnitts vorhandene weitere Wicklungen der beiden Folien werden durch die drei Punkte "..." angedeutet. Rechts oben ist in Fig. 1 sowie allen anderen Figuren das elektrische Schaltbild des jeweiligen Folienkondensators dargestellt.

Zur Erreichung von Selbstheilungseigenschaften wird bevorzugt ab einer bestimmten Grenze 5 bzw. 6 quer zum Folienwickel die Schichtdicke der Metallbeschichtung 2 bzw. 4 in Peilrichtung reduziert. Bei einem etwaigen Durschlag verdampft am Ort des Durchschlags die jeweils dünnere Metallschicht, ohne die Folie zu karbonisieren, so dass keine leitende Verbindung zwischen den beiden Metallschichten entsteht. Hierdurch wird eine Selbstheilung der Schichten bewirkt.

Aus dem Stand der Technik bekannte Folienkondensatoren haben eine Kapazität maximal bis in den Mikrofaradbereich und eine Spannungsfestigkeit bis in den vierstelligen Voltbereich. Folienkondensatoren sind aus EP3016120A1 und US3855507A bekannt.

Mit dem Einzug neuer technologischer Aufgaben, wie dem verstärken Einsatz erneuerbarer Energien und der damit verbundenen Dezentralisierung der elektrischen Versorgungsnetze, oder der zunehmenden Elektromobilität mit ihren Herausforderungen in Richtung Energiespeicherung, Ladetechnik und Energierückgewinnung, steigt auch der Bedarf an Kondensatoren und Super-Kondensatoren mit hoher Kapazität, Energiedichte. Diese werden für die kurzzeitige Zwischenspeicherung elektrischer Energie zum Beispiel für Peak-Shaving in Stromnetzen oder zur Speicherung von Bremsenergie in Elektrofahrzeugen, aber auch zum Überlast-Schutz von Li-Ionen-Akkus in Elektrowerkzeugen, wenn diese kurzfristig einen sehr hohen Strombedarf zu decken haben, verwendet. Diese Anforderungen sind mit den aus dem Stand der Technik bekannten Folienkondensatoren nicht realisierbar.

Aufgabe der vorliegenden Erfindung ist es demzufolge, die Kapazität von Folienkondensatoren zu erhöhen, bevorzugt um den Faktor 10 bis 10.000 zu steigern, um sie für neue technologische Aufgaben interessant zu machen und an diese anzupassen.

Diese Aufgabe wird durch die Merkmale der unabhängigen Ansprüche gelöst. Weiterbildungen der Erfindung sind Gegenstand der abhängigen Ansprüche.

Erfindungsgemäß ist mindestens eine Schicht aus einem Dielektrikum, das eine gegenüber der Permittivität $\varepsilon_r$ der Folie höhere Permittivität $\varepsilon_r$ aufweist, bevorzugt vollflächig zwischen den beiden Folien angeordnet. Die Schicht aus einem Dielektrikum ist hierbei auf die Metallschicht einer oder beider Folien aufgedruckt. Durch die Erhöhung der Permittivität $\varepsilon_r$ des Dielektrikums wird die Kapazität des Folienkondensators erhöht. Die Durchschlagfestigkeit hingegen bleibt gleich, bzw. wird leicht erhöht. Natürlich kann auch hier, wie in allen nachfolgenden Ausführungsformen die oben beschriebene abgestufte Metallbeschichtung zur Gewährleistung der Selbstheilung verwendet werden.

Die Schicht aus einem Dielektrikum ist besonders bevorzugt auf die Metallschicht einer Folie aufgedruckt, so dass sie als Abstandsschicht zwischen zwei den beiden Folien wirkt.

Beispielsweise ist Permittivität $\varepsilon_r$ des Dielektrikums um den Faktor 10 bis 500 höher als die Permittivität $\varepsilon_r$ der Folie, so dass die Kapazität des Folienkondensators um den Faktor 10 bis 500 höher ist als bei einem Folienkondensator ohne die Schicht aus einem Dielektrikum. Die Permittivität $\varepsilon_r$ des gedruckten Dielektrikums kann dabei beispielsweise Werte von 20 bis ca. 2.000 annehmen.

Alternativ dazu ist mindestens eine Schicht aus einem Dielektrikum auf der Metallschicht der ersten Folie aufgedruckt und die zweite Folie so angeordnet, dass ihre Metallschicht zur Metallschicht der ersten Folie weist, so dass die Metallschicht der ersten Folie und die Metallschicht der zweiten Folie nur durch die dünne Schicht Dielektrikum voneinander getrennt sind. Dadurch wird die Kapazität zusätzlich erhöht, da die Dicke der Folie jetzt als Abstand der Kondensatorelektroden wergfällt und nur die Dicke des aufgedruckten Dielektrikums in die Formel als Abstand d eingeht. Das bedeutet, dass beispielsweise bei einer Foliendicke von 6 $\mu$m und einer Schichtdicke des aufgedruckten Dielektrikums von 0,3 $\mu$m die Kapazität des Kondensators allein durch die verringerte Dicke bzw. den verringerten Abstand d um den Faktor 20 gegenüber der Kapazität eines aus dem Stand der Technik bekannten Folienkondensators erhöht wird.

Besonders bevorzugt weist auch bei der zweiten erfindungsgemäßen Alternative die Schicht aus einem Dielektrikum eine gegenüber der Permittivität $\varepsilon_r$ der Folie höhere Permittivität $\varepsilon_r$ auf. Beispielsweise ist Permittivität $\varepsilon_r$ des Dielektrikums um den Faktor 10 bis 500 höher als die Permittivität $\varepsilon_r$ der Folie, so dass die Kapazität des Folienkondensators insgesamt um den Faktor 200 bis 10.000 höher ist als bei einem Folienkondensator ohne die Schicht aus einem Dielektrikum.

Die erste Folie bildet mit ihrer Metallschicht zusammen mit der zweiten Folie mit ihrer Metallschicht besonders bevorzugt einen Kondensator-Wickel. Die beiden Folien mit etwa gleich großer Fläche werden hierbei für die nachfolgende Schoopierung etwas seitlich bzw. axial versetzt zueinander übereinander gelegt und an einer Längsseite zu einem Wickel zusammengewickelt bzw. aufgerollt.

Selbstverständlich ist nicht nur ein Wickeln der Folien des Folienkondensators mit einer axialen Anordnung der Folien möglich, sondern auch alle anderen aus dem Stand der Technik bekannten Bauformen, beispielsweise eine Anordnung aus geschichteten Einzellagen. Hierbei wird eine Vielzahl von metallisierten ersten und zweiten Folien, die bevorzugt ebene Einzellagen bilden, übereinander geschichtet bzw. gestapelt und durch eine Schoopierung zu einem Kondensator verbunden. Es ergibt sich ein Kondensator mit einem quadratischen oder rechteckigen Formfaktor, der schichtweise aus Folien-Blattmaterial mit entsprechendem Versatz der ersten und der zweiten Folie aufgestapelt ist. Alternativ kann der Kondensator auch durch kreuzweises Übereinanderlegen und Falten der ersten und zweiten Folie aufgebaut werden.

Die Einzelblätter des Kondensators können auch eine beliebige Außenkontur bzw. Umrissform haben, sodass der Kondensator beispielsweise als Formelement in eine Fahrzeugkarosserie oder ähnlichem eingebaut werden kann. Der Kondensator kann somit sogar besonders bevorzugt als Funktionselement mit einer mechanischen oder optischen Zusatzfunktion ausgebildet sein.

Im Stand der Technik wird die Kapazität von Folienkondensatoren hauptsächlich durch die Eigenschaften der entsprechenden Folien bestimmt. Besonders vorteilhaft wird die Kapazität und Energiedichte eines erfindungsgemäßen Folienkondensators jedoch durch den Einsatz von Folien-Druck- und Beschichtungs-Technologie, wie sie bei der Herstellung von Hochsicherheitsfolien zum Einsatz kommt, unter Verwendung von Materialien mit hoher Permittivität $\varepsilon_r$ und/oder mit geringer Schichtdicke um Faktor 10 bis 10.000 gegenüber aus dem Stand der Technik bekannten Folienkondensatoren gesteigert.

Gemäß einer bevorzugten Ausführungsform ist die Schicht aus einem Dielektrikum mittels Druckverfahren, beispielsweise Offsetdruck, Flexodruck, Tiefdruck oder Siebdruck auf die Metallschicht einer Folie oder auf die unbeschichtete Seite einer oder beider Folien des Wickels, die der Metallisierung gegenüber liegt, aufgedruckt. Durch den Einsatz dieser aus dem Stand der Technik bekannten Druckverfahren kann die Schichtdicke des Dielektrikums beispielsweise bis auf 0,2 $\mu$m reduziert werden. Im Vergleich zu einer 6 $\mu$m dicken Kondensatorfolie kann die Kapazität somit bereits um Faktor 30 gesteigert werden. Die Reduktion der Dielektrikums-Schichtdicke geht allerdings mit einer Reduktion der Durchschlagsfestigkeit einher und ist deshalb mit den Anforderungen der jeweiligen Anwendung abzustimmen.

Die Schicht aus einem Dielektrikum besteht besonders bevorzugt aus Pigmenten aus einem Material, das eine hohe Permittivität $\varepsilon_r$ besitzt, die in einem für den Druckprozess nötigen Bindemittel mit guten Isoliereigenschaften und bevorzugt ebenfalls hoher Permittivität $\varepsilon_r$ dispergiert sind. Derartige Pigmente bestehen beispielsweise aus $SiO_2$ (Silizium-Dioxid), $ZrO_2$ (Zirkon-Dioxid), $BaTiO_3$ Barium-Titanat, $CaTiO_3$ Calcium-Titanat oder $TiO_2$ (TitanDioxid). Besonders vorteilhaft ist dabei die Verwendung sowohl von anorganischen als auch organischen Ferroelektrika. Das Bindemittel kann für UV-Trocknung oder lösemittelbasiert, für thermische Trocknung, für Ionenstrahltrocknung oder kombiniert ausgelegt sein.

Gemäß einer weiteren bevorzugten Ausführungsform sind beide Folien des Folienkondensator mit jeweils einer dünnen dielektrischen Schicht bedruckt. Dadurch können Kapazität und Durchschlagsfestigkeit weiter erhöht werden.

Erfindungsgemäß sind beide Folien des Folienkondensators beidseitig metallisiert und beide Folien auf einer Seite mit einer Schicht Dielektrikum bedruckt. Hierdurch wird die Kapazität gegenüber den zuvor genannten Anordnungen um den Faktor zwei multipliziert mit dem Quotienten aus Foliendicke und Schichtdicke des Dielektrikums erhöht, da hier zwei Kondensatoren bei fast gleichem Volumen der Anordnung durch das spätere Schoopieren parallel geschaltet werden. Werden beide Folien hingegen beidseitig metallisiert und beidseitig mit einer dünnen Schicht Dielektrikum bedruckt, kann die Durchschlagsfestigkeit erhöht werden, die Kapazität wird jedoch in etwa halbiert.

Gemäß einer weiteren bevorzugten Ausführungsform sind auf die Schicht Dielektrikum mindestens zwei weitere Metallisierungen und dazwischen sowie darauf jeweils mindestens eine weitere Schicht Dielektrikum aufgebracht. Durch das Aufbringen jeder weiteren Folge von zwei Metallisierungen und zwei Schichten Dielektrikum werden zwei weiterer Kondensatoren parallel dazu geschaltet. Hierbei ergibt sich eine Kapazitätssteigerung durch Parallelschaltung mehrerer gedruckter und/oder bedampfter Schichten.

Zur Erhöhung der Spannungsfestigkeit kann in jeder der oben aufgeführten Anordnungen die Schichtdicke des Dielektrikums erhöht werden. Im Tiefdruck wird dafür z.B. das Schöpfvolumen der Rasterwalze erhöht. Es können aber auch mehrere Druckschichten übereinander gedruckt werden.

Des Weiteren kann auch auf die Schicht Dielektrikum eine Abfolge aus mehreren Schichten Metallisierungen und Dielektrika übereinander gedruckt bzw. beschichtet sein, was einer Reihenschaltung von Kondensatoren entspricht und damit die Spannungsfestigkeit erhöht. Es ist darauf zu achten, dass innenliegende Metallschichten gegenüber den sie umgebenden Schichten aus Dielektrikum an ihren seitlichen Rändern zurückversetzt angeordnet sind, sie also nicht bis an die seitlichen Ränder der sie umgebenden Schichten geführt werden oder diese gar nach außen überragen, sodass kein Kurzschluss zwischen benachbarten Metallschichten auftreten kann.

Gemäß einer weiteren bevorzugten Ausführungsform kann die Metallisierung nicht vollflächig, sondern strukturiert aufgebracht werden, um damit eine Reihenschaltung einzelner Kondensatoren sowie eine bessere Spannungsfestigkeit des Folienkondensators zu erzielen. Die Strukturierung der Metallisierung kann beispielsweise durch strukturiertes Bedruckung der Folie mit Waschfarbe, Aufbringen der Metallschicht großflächig über der Waschfarbe und anschließendem Waschen und Abtragen der Metallschicht über den mit Waschfarbe versehenen Bereichen erfolgen, wie es beispielsweise aus WO 1999/013157 A1 bekannt ist. Alternativ kann die Strukturierung der Metallisierung mittels Laser-Ablation erfolgen.

Für die Erhöhung der Durchschlagfestigkeit und der damit einher gehenden Steigerung der möglichen Betriebsspannung werden somit mehrere Teilkondensatoren in Reihe geschaltet. Dies kann entweder durch die abwechselnde Übereinander-Schichtung von mehreren dielektrischen und leitfähigen Schichten und/oder durch die gezielte Einbringung von Unterbrechungen, beispielsweise mittels Waschfarbe und anschließendem auswaschen oder mittels Laserstrahlung erfolgen.

Sowohl die erste als auch die zweite Folie des Wickels können anstatt aus einer Kunststofffolie einer der oben genannten Kunststoffe auch als Metallfolie, beispielsweise als Aluminiumfolie, ausgeführt sein.

Um das Volumen des Kondensators weiter zu verringern bzw. dessen Energiedichte weiter zu erhöhen, wird in einer weiteren Ausprägungsform vor der ersten Metallisierung auf die Folien jeweils eine Release-Schicht und ein dünner UV-Lack aufgebracht. Bei der Herstellung des Kondensator-Wickels werden kurz vor der Wickelposition im Wickelautomaten die beiden Folien vom Rest des Aufbaus getrennt und nur die zwei dünnen Lackschichten mit Metallisierung und Dielektrikum etc. übereinander gewickelt. Dadurch kann das Volumen des Wickels um das Folienvolumen abzüglich des Volumens des UV-Lacks reduziert werden.

Gemäß einer weiteren bevorzugten Ausführungsform kann eine Release-Schicht zwischen den Folien und der ersten Metallisierung angebracht sein und wird beim Wickeln nur die Metall- und Druck-Schichten aufgewickelt oder gestapelt. Diese Ausführungsform entspricht einem Druck-Transfer-Kondensator.

Es versteht sich, dass die vorstehend genannten und die nachfolgend noch zu erläuternden Merkmale nicht nur in den angegebenen Kombinationen, sondern auch in anderen Kombinationen einsetzbar sind, ohne den Rahmen der vorliegenden Erfindung zu verlassen, soweit dies von dem Schutzumfang der Ansprüche erfasst ist.

Anhand der nachfolgenden Ausführungsbeispiele und der ergänzenden Figuren werden die Vorteile der Erfindung erläutert. Die Ausführungsbeispiele stellen bevorzugte Ausführungsformen dar, auf die jedoch die Erfindung in keinerlei Weise beschränkt sein soll. Des Weiteren sind die Darstellungen in den Figuren des besseren Verständnisses wegen stark schematisiert und spiegeln nicht die realen Gegebenheiten wider. Insbesondere entsprechen die in den Figuren gezeigten Proportionen nicht den in der Realität vorliegenden Verhältnissen und dienen ausschließlich zur Verbesserung der Anschaulichkeit. Des Weiteren sind die in den folgenden Ausführungsbeispielen beschriebenen Ausführungsformen der besseren Verständlichkeit wegen auf die wesentlichen Kerninformationen reduziert. Bei der praktischen Umsetzung können wesentlich komplexere geometrische Ausformungen oder Schichtfolgen zur Anwendung kommen.

Im Einzelnen zeigen schematisch:

Fig. 1      einen aus dem Stand der Technik bekannten Folienkondensator,

Fig. 2      einen nicht durch die Erfindung abgedeckten Folienkondensator in einer ersten Ausführungsform,

Fig. 3      einen nicht durch die Erfindung abgedeckten Folienkondensator in einer zweiten Ausführungsform,

Fig. 4      einen nicht durch die Erfindung abgedeckten Folienkondensator in einer dritten Ausführungsform,

Fig. 5      einen nicht durch die Erfindung abgedeckten Folienkondensator in einer vierten Ausführungsform,

Fig. 6      einen erfindungsgemäßen Folienkondensator in einer fünften Ausführungsform,

Fig. 7      einen nicht durch die Erfindung abgedeckten Folienkondensator in einer sechsten Ausführungsform.

Fig. 2 zeigt schematisch einen nicht durch die Erfindung abgedeckten Folienkondensator in einer ersten Ausführungsform. Eine dünne Schicht Dielektrikum 7 mit hoher Permittivität $\varepsilon_r$ wird auf die Metallschicht 2 der Folie 1 gedruckt, so dass die dünne Schicht Dielektrikum 7 zwischen den beiden Teil-Wickeln 1, 2 und 3, 4 angeordnet ist. Durch die hohe Permittivität $\varepsilon_r$ des Dielektrikums kann die Kapazität wesentlich gesteigert werden, die Durchschlagfähigkeit bleibt gleich, bzw. wird leicht verbessert.

In diesem Ausführungsbeispiel, wie auch in allen nachfolgenden Ausführungsbeispielen kann die oben beschriebene abgestufte Metallbeschichtung zur Gewährleistung der Selbstheilung verwendet werden. Zur Erhöhung der Übersichtlichkeit ist eine derartige Abstufung jedoch in den Fig. 2 bis 7 nicht dargestellt.

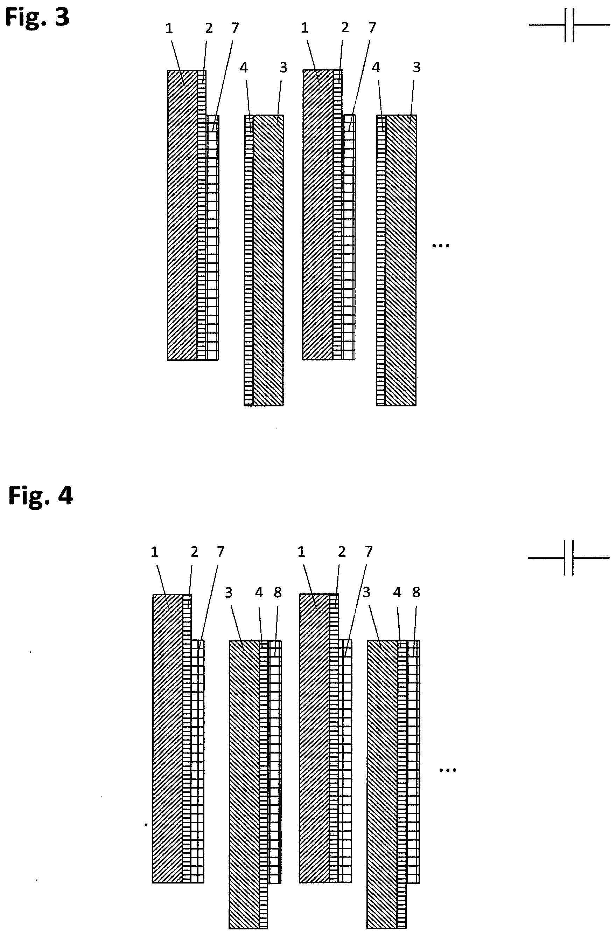

In der nicht durch die Erfindung abgedeckten Fig. 3 ist der zweite Teil-Wickel 3, 4 gegenüber dem in Fig. 2 dargestellten Folienkondensator gedreht. Damit ist bei dem Teil-Wickel 3, 4 die Metallschicht 4 auf der gegenüberliegenden Seite aufgebracht, so dass die Metallschicht 4 und die Metallschicht 2 nur durch die dünne Schicht Dielektrikum 7 voneinander getrennt sind. Dadurch wird die Kapazität zusätzlich erhöht, da die Dicke der Folie 3 als zusätzlicher Abstand der Kondensatorelektroden 2 und 4 wegfällt und nur die Dicke des aufgedruckten Dielektrikums 7 in die oben angegebene Formel als Abstand d eingeht. Das bedeutet, dass beispielsweise bei einer Dicke der Folie 3 von 6 $\mu$m und einer Schichtdicke des aufgedruckten Dielektrikums 7 von 0,3 $\mu$m die Kapazität des Kondensators allein durch den verringerten Abstand um den Faktor 20 erhöht wird.

In der nicht durch die Erfindung abgedeckten Fig. 4 wird zusätzlich zu dem in Fig. 2 dargestellten Folienkondensator auch auf die Metallisierung 4 eine dünne Schicht Dielektrikum 8 mit hoher Permittivität $\varepsilon_r$ aufgedruckt.

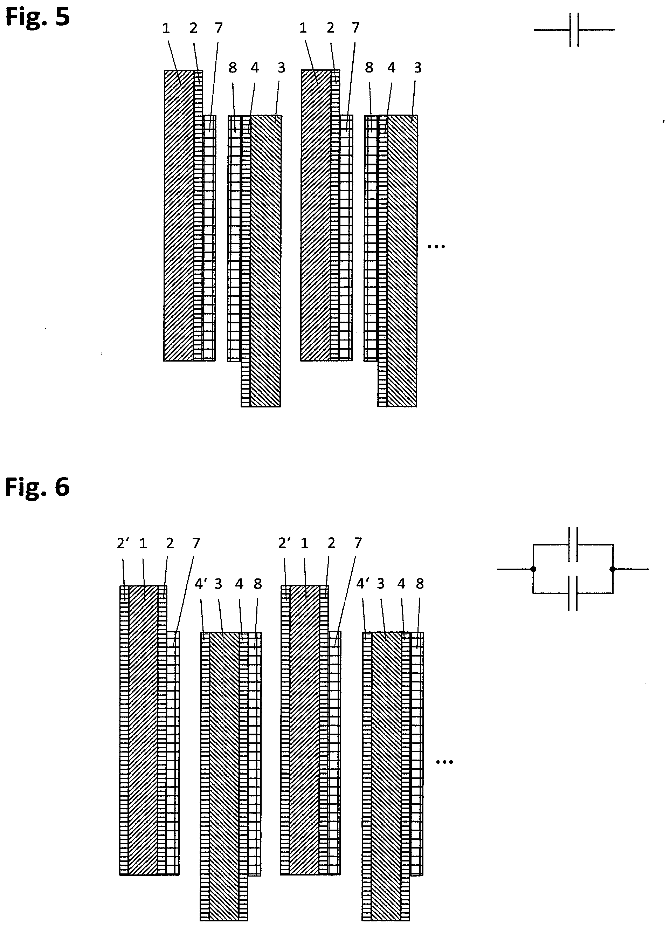

Das in der nicht durch die Erfindung abgedeckten Fig. 5 dargestellte Ausführungsbeispiel entspricht dem in Fig. 3 dargestellten Ausführungsbeispiel, wobei wie bei dem in Fig. 4 dargestellten Ausführungsbeispiel auf die Metallisierung 4 eine dünne Schicht Dielektrikum 8 mit hoher Permittivität $\varepsilon_r$ aufgedruckt ist.

Das in Fig. 6 dargestellte Ausführungsbeispiel entspricht dem in Fig. 2 dargestellten Ausführungsbeispiel, wobei die Folien 1 und 3 der beiden Wickel auf beiden Seiten eine Metallisierung aufweisen. Zusätzlich zu dem in Fig. 2 dargestellten Folienkondensator ist dabei auf Folie 1 die Metallisierung 2' und auf Folie 3 die Metallisierung 4' aufgebracht. Es ergibt sich eine Parallelschaltung aus zwei Kondensatoren, entsprechend dem rechts oben dargestellten elektrischen Schaltbild.

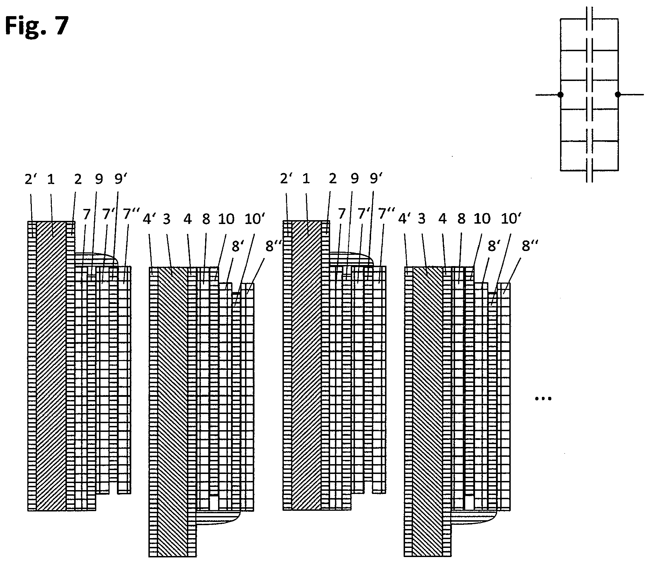

Fig. 7 zeigt schematisch eine nicht durch die Erfindung abgedeckte Anordnung, mit der die Kapazität des Kondensators bei moderatem Volumenzuwachs durch Parallelschaltung von sechs Kondensatoren versechsfacht werden kann. Dabei werden die Folien 1 und 3 zuerst beidseitig metallisiert 2 und 2' sowie 4 und 4' und anschließend mit den ersten Dielektrika 7 und 8 bedruckt. Danach wird noch jeweils zweimal metallisiert 9 und 9' sowie 10 und 10' und zweimal Dielektrikum 7' und 7" sowie 8' und 8" gedruckt.

Die Metallschichten 9 und 10 sind an ihren seitlichen Rändern gegenüber den Dielektrikums-Schichten 7 und 7' bzw. 8 und 8' soweit nach innen zurückversetzt, dass sie nicht bis an die seitlichen Ränder der sie umgebenden Schichten geführt werden oder diese gar nach außen überragen, so dass bei der Metallisierung mit 9' und 10' kein Kurzschluss mit der Metallisierung 9 und 10 stattfindet. Metallisierung 9' und 10' sind so durchzuführen, dass sie eine Brücke über die Dielektrika 7 und 7' bzw. 8 und 8' zur Metallisierung 2 und 4 bilden. Die Metallisierungen 9 und 10 müssen jeweils im hinteren Bereich gegenüber den Dielektrika 7' und 7" bzw. 8' und 8" so weit vorstehen, dass sich nach dem Wickeln ein galvanischer Kontakt der Metallisierungen 9 mit 4' und 2' mit 10 ergibt.

Falls ein sicherer Kontakt durch das Wickeln alleine nicht gewährleistet sein sollte, kann an den nicht von den Schichten des Dielektrikums 7' und 7" bzw. 8' und 8" verdeckten Bereichen der Metallisierungen 9 und 10, vorzugsweise auf den Flächen der Metallisierungen 2' und 4', streifenförmig ein leitfähiger Kleber zur besseren Verbindung aufgebracht werden.

Durch das Wickeln und anschließendes Schoopieren werden alle sechs Kondensatoren parallel geschaltet, entsprechend dem rechts oben dargestellten elektrischen Schaltbild.

**Patentansprüche**

1.  Folienkondensator aus einer ersten und einer zweiten Folie (1, 3), wobei beide Folien (1, 3) jeweils eine relative Permittivität $\varepsilon_r$ aufweisen und jeweils mit einer Metallschicht (2, 2', 4, 4') beschichtet bzw. bedampft sind, wobei mindestens eine Schicht (7, 8) aus einem Dielektrikum, das eine gegenüber der Permittivität $\varepsilon_r$ der Folie (1, 3) höhere Permittivität $\varepsilon_r$ aufweist, bevorzugt vollflächig zwischen den beiden Folien (1, 3) angeordnet ist, wobei die Schicht (7, 8) aus einem Dielektrikum auf die Metallschicht (2, 2', 4, 4') einer oder beider Folien (1, 3) aufgedruckt ist, **dadurch gekennzeichnet, dass** beide Folien (1, 3) beidseitig metallisiert und beide Folien (1, 3) auf mindestens einer Seite mit einer Schicht (7, 8) Dielektrikum bedruckt sind.

2.  Folienkondensator aus einer ersten und einer zweiten Folie (1, 3), wobei beide Folien (1, 3) jeweils eine relative Permittivität $\varepsilon_r$ aufweisen und jeweils mit einer Metallschicht (2, 2', 4, 4') beschichtet bzw. bedampft sind, wobei mindestens eine Schicht (7) aus einem Dielektrikum auf der Metallschicht (2, 2') der ersten Folie (1) aufgedruckt und die zweite Folie (3) so angeordnet ist, dass ihre Metallschicht (4, 4') zur Metallschicht (2, 2') der ersten Folie (1) weist, so dass die Metallschicht (2, 2') der ersten Folie (1) und die Metallschicht (4, 4') der zweiten Folie (3) nur durch die dünne Schicht (7) Dielektrikum voneinander getrennt sind, **dadurch gekennzeichnet, dass** beide Folien (1, 3) beidseitig metallisiert und beide Folien (1, 3) auf mindestens einer Seite mit einer Schicht (7, 8) Dielektrikum bedruckt sind.

3.  Folienkondensator nach Anspruch 2, **dadurch gekennzeichnet, dass** die Schicht (7, 8) aus einem Dielektrikum eine gegenüber der Permittivität $\varepsilon_r$ der Folie (1, 3) höhere Permittivität $\varepsilon_r$ aufweist.

4.  Folienkondensator nach mindestens einem der vorigen Ansprüche, **dadurch gekennzeichnet, dass** die Schicht (7, 8) aus einem Dielektrikum aus Pigmenten aus einem Material besteht, das eine hohe Permittivität $\varepsilon_r$ besitzt, die in einem Bindemittel mit guten Isoliereigenschaften und ebenfalls hoher Permittivität $\varepsilon_r$ dispergiert sind.

5.  Folienkondensator nach mindestens einem der vorigen Ansprüche, **dadurch gekennzeichnet, dass** beide Folien (1, 3) mit jeweils einer dielektrischen Schicht (7, 8) bedruckt sind.

6.  Folienkondensator nach mindestens einem der vorigen Ansprüche, **dadurch gekennzeichnet, dass** auf die Schicht (7, 8) Dielektrikum mindestens zwei weitere Metallisierungen (9, 9', 10, 10') und dazwischen sowie darauf jeweils mindestens eine weitere Schicht (7', 7", 8', 8") Dielektrikum aufgebracht ist.

7.  Folienkondensator nach mindestens einem der vorigen Ansprüche, **dadurch gekennzeichnet, dass** die erste Folie (1) mit ihrer Metallschicht (2, 2') zusammen mit der zweiten Folie (3) mit ihrer Metallschicht (4, 4') einen Kondensator-Wickel bildet.

8.  Verfahren zur Herstellung eines Folienkondensators aus einer ersten und einer zweiten Folie (1, 3), wobei beide Folien (1, 3) jeweils eine relative Permittivität $\varepsilon_r$ aufweisen und jeweils mit Metallschichten (2, 2', 4, 4') beschichtet bzw. bedampft werden, wobei mindestens eine Schicht (7, 8) aus einem Dielektrikum, das eine gegenüber der Permittivität $\varepsilon_r$ der Folie (1, 3) höhere Permittivität $\varepsilon_r$ aufweist, bevorzugt vollflächig zwischen den beiden Folien (1, 3) angeordnet wird, wobei die Schicht (7, 8) aus einem Dielektrikum auf die Metallschicht (2, 2', 4, 4') einer oder beider Folien (1, 3) aufgedruckt wird, **dadurch gekennzeichnet, dass** beide Folien (1, 3) beidseitig metallisiert und beide Folien (1, 3) auf mindestens einer Seite mit einer Schicht (7, 8) Dielektrikum bedruckt werden.

9.  Verfahren zur Herstellung eines Folienkondensators aus einer ersten und einer zweiten Folie (1, 3), wobei beide Folien (1, 3) jeweils eine relative Permittivität $\varepsilon_r$ aufweisen und jeweils mit Metallschichten (2, 2', 4, 4') beschichtet bzw. bedampft werden, wobei mindestens eine Schicht (7) aus einem Dielektrikum auf der Metallschicht (2, 2') der ersten Folie (1) aufgedruckt und die zweite Folie (3) so angeordnet wird, dass ihre Metallschicht (4, 4') zur Metallschicht (2, 2') der ersten Folie (1) weist, so dass die Metallschicht (2, 2') der ersten Folie (1) und die Metallschicht (4, 4') der zweiten Folie (3) nur durch die dünne Schicht (7) Dielektrikum voneinander getrennt wird, **dadurch gekennzeichnet, dass** beide Folien (1, 3) beidseitig metallisiert und beide Folien (1, 3) auf mindestens einer Seite mit einer Schicht Dielektrikum (7, 8) bedruckt werden.

10. Verfahren nach Anspruch 9, **dadurch gekennzeichnet, dass** die Schicht aus einem Dielektrikum (7, 8) mittels Druckverfahren, beispielsweise Offsetdruck, Flexodruck, Tiefdruck oder Siebdruck auf die Metallschicht (2, 2', 4, 4') einer Folie aufgedruckt wird.

11. Verfahren nach Anspruch 9 oder 10, **dadurch gekennzeichnet, dass** beide Folien (1, 3) mit jeweils einer dielektrischen Schicht (7, 8) bedruckt werden.

12. Verfahren nach mindestens einem der Ansprüche 9 bis 11, **dadurch gekennzeichnet, dass** auf die Schicht (7, 8) Dielektrikum mindestens zwei weitere Metallisierungen (9, 9', 10, 10') und dazwischen sowie darauf jeweils mindestens eine weitere Schicht (7', 7", 8', 8") Dielektrikum aufgebracht wird.

## Claims

1. Film capacitor comprising a first and a second film (1, 3), wherein both films (1, 3) each have a relative permittivity $\varepsilon_r$ and are each provided with a metal layer (2, 2', 4, 4') by coating or vapour deposition, wherein at least one layer (7, 8) composed of a dielectric, which has a higher permittivity $\varepsilon_r$ than the permittivity $\varepsilon_r$ of the film (1, 3), is arranged between the two films (1, 3), preferably over the entire surface area, wherein the layer (7, 8) composed of a dielectric is printed onto the metal layer (2, 2', 4, 4') of one or both films (1, 3), **characterized in that** both films (1, 3) are metallized on both sides and both films (1, 3) are printed with a layer (7, 8) of dielectric on at least one side.

2. Film capacitor comprising a first and a second film (1, 3), wherein both films (1, 3) each have a relative permittivity $\varepsilon_r$ and are each provided with a metal layer (2, 2', 4, 4') by coating or vapour deposition, wherein at least one layer (7) composed of a dielectric is printed on the metal layer (2, 2') of the first film (1) and the second film (3) is arranged such that its metal layer (4, 4') faces the metal layer (2, 2') of the first film (1), so that the metal layer (2, 2') of the first film (1) and the metal layer (4, 4') of the second film (3) are separated from each other only by the thin layer (7) of dielectric, **characterized in that** both films (1, 3) are metallized on both sides and both films (1, 3) are printed with a layer (7, 8) of dielectric on at least one side.

3. Film capacitor according to Claim 2, **characterized in that** the layer (7, 8) composed of a dielectric has a higher permittivity $\varepsilon_r$ than the permittivity $\varepsilon_r$ of the film (1, 3).

4. Film capacitor according to at least one of the preceding claims, **characterized in that** the layer (7, 8) composed of a dielectric consists of pigments which are composed of a material which has a high permittivity $\varepsilon_r$ and are dispersed in a binder with good insulating properties and likewise high permittivity $\varepsilon_r$.

5. Film capacitor according to at least one of the preceding claims, **characterized in that** both films (1, 3) are each printed with a dielectric layer (7, 8).

6. Film capacitor according to at least one of the preceding claims, **characterized in that** at least two further metallizations (9, 9', 10, 10') are applied to the layer (7, 8) of dielectric and at least one further layer (7', 7", 8', 8") of dielectric is applied between and on each of the two further metallizations.

7. Film capacitor according to at least one of the preceding claims, **characterized in that** the first film (1) with its metal layer (2, 2') forms a capacitor winding together with the second film (3) with its metal layer (4, 4').

8. Method for producing a film capacitor comprising a first and a second film (1, 3), wherein both films (1, 3) each have a relative permittivity $\varepsilon_r$ and are each provided with metal layers (2, 2', 4, 4') by coating or vapour deposition, wherein at least one layer (7, 8) composed of a dielectric, which has a higher permittivity $\varepsilon_r$ than the permittivity $\varepsilon_r$ of the film (1, 3), is arranged between the two films (1, 3), preferably over the entire surface area, wherein the layer (7, 8) composed of a dielectric is printed onto the metal layer (2, 2', 4, 4') of one or both films (1, 3), **characterized in that** both films (1, 3) are metallized on both sides and both films (1, 3) are printed with a layer (7, 8) of dielectric on at least one side.

9. Method for producing a film capacitor comprising a first and a second film (1, 3), wherein both films (1, 3) each have a relative permittivity $\varepsilon_r$ and are each provided with metal layers (2, 2', 4, 4') by coating or vapour deposition, wherein at least one layer (7) composed of a dielectric is printed on the metal layer (2, 2') of the first film (1) and the second film (3) is arranged such that its metal layer (4, 4') faces the metal layer (2, 2') of the first film (1), so that the metal layer (2, 2') of the first film (1) and the metal layer (4, 4') of the second film (3) are separated from each other only by the thin layer (7) of dielectric, **characterized in that** both films (1, 3) are metallized on both sides and both films (1, 3) are printed with a layer (7, 8) of dielectric on at least one side.

10. Method according to Claim 9, **characterized in that** the layer composed of a dielectric (7, 8) is printed onto the metal layer (2, 2', 4, 4') of a film by means of printing methods, for example offset printing, flexographic printing, gravure printing or screen printing.

11. Method according to Claim 9 or 10, **characterized in that** both films (1, 3) are each printed with a dielectric layer (7, 8).

12. Method according to at least one of Claims 9 to 11, **characterized in that** at least two further metallizations (9, 9', 10, 10') are applied to the layer (7, 8) of dielectric and at least one further layer (7', 7", 8', 8") of dielectric is applied between and on each of the two further metallizations.

**Revendications**

1. Condensateur à films constitué d'un premier et d'un deuxième film (1, 3), les deux films (1, 3) présentant respectivement une permittivité relative $\varepsilon_r$ et étant respectivement recouverts ou métallisés d'une couche de métal (2, 2', 4, 4'), au moins une couche (7, 8) constituée d'un diélectrique qui présente une permittivité $\varepsilon_r$ plus élevée que la permittivité $\varepsilon_r$ du film (1, 3) étant disposée de préférence sur toute la surface entre les deux films (1, 3), la couche (7, 8) constituée d'un diélectrique étant imprimée sur la couche métallique (2, 2', 4, 4') de l'un ou des deux films (1, 3), **caractérisé en ce que** les deux films (1, 3) sont métallisés sur les deux faces et **en ce que** les deux films (1, 3) sont imprimés sur au moins une face avec une couche (7, 8) de diélectrique.

2. Condensateur à films constitué d'un premier et d'un deuxième film (1, 3), les deux films (1, 3) présentant respectivement une permittivité relative $\varepsilon_r$ et étant respectivement recouverts ou métallisés d'une couche de métal (2, 2', 4, 4'), au moins une couche (7) constituée d'un diélectrique étant imprimée sur la couche métallique (2, 2') du premier film (1) et le deuxième film (3) étant disposé de telle sorte que sa couche métallique (4, 4') soit tournée vers la couche métallique (2, 2') du premier film (1), de sorte que la couche métallique (2, 2') du premier film (1) et la couche métallique (4, 4') du deuxième film (3) ne soient séparées l'une de l'autre que par la mince couche (7) de diélectrique, **caractérisé en ce que** les deux films (1, 3) sont métallisés sur les deux faces et **en ce que** les deux films (1, 3) sont imprimés sur au moins une face avec une couche (7, 8) de diélectrique.

3. Condensateur à films selon la revendication 2, **caractérisé en ce que** la couche (7, 8) constituée d'un diélectrique présente une permittivité $\varepsilon_r$ plus élevée que la permittivité $\varepsilon_r$ du film (1, 3).

4. Condensateur à films selon au moins l'une des revendications précédentes, **caractérisé en ce que** la couche (7, 8) constituée d'un diélectrique est composée de pigments constitués d'un matériau qui possède une permittivité $\varepsilon_r$ élevée, lesquels pigments sont dispersés dans un liant présentant de bonnes propriétés isolantes ainsi qu'une permittivité $\varepsilon_r$ élevée.

5. Condensateur à films selon au moins l'une des revendications précédentes, **caractérisé en ce que** les deux films (1, 3) sont respectivement imprimés avec une couche diélectrique (7, 8).

6. Condensateur à films selon au moins l'une des revendications précédentes, **caractérisé en ce qu'**au moins deux autres métallisations (9, 9', 10, 10') ainsi qu'au moins une autre couche (7', 7", 8', 8") de diélectrique situées entre celles-ci et sur celles-ci sont appliquées sur la couche (7, 8) de diélectrique.

7. Condensateur à films selon au moins l'une des revendications précédentes, **caractérisé en ce que** le premier film (1) doté de sa couche métallique (2, 2') forme, avec le deuxième film (3) doté de sa couche métallique (4, 4'), un bobinage de condensateur.

8. Procédé de fabrication d'un condensateur à films constitué d'un premier et d'un deuxième film (1, 3), les deux films (1, 3) présentant respectivement une permittivité relative $\varepsilon_r$ et étant respectivement recouverts ou métallisés d'une couche de métal (2, 2', 4, 4'), au moins une couche (7, 8) constituée d'un diélectrique qui présente une permittivité $\varepsilon_r$ plus élevée que la permittivité $\varepsilon_r$ du film (1, 3) étant disposée de préférence sur toute la surface entre les deux films (1, 3), la couche (7, 8) constituée d'un diélectrique étant imprimée sur la couche métallique (2, 2', 4, 4') de l'un ou des deux films (1, 3), **caractérisé en ce que** les deux films (1, 3) sont métallisés sur les deux faces et **en ce que** les deux films (1, 3) sont imprimés sur au moins une face avec une couche (7, 8) de diélectrique.

9. Procédé de fabrication d'un condensateur à films constitué d'un premier et d'un deuxième film (1, 3), les deux films (1, 3) présentant respectivement une permittivité relative $\varepsilon_r$ et étant respectivement recouverts ou métallisés d'une couche de métal (2, 2', 4, 4'), au moins une couche (7) constituée d'un diélectrique étant imprimée sur la couche métallique (2, 2') du premier film (1) et le deuxième film (3) étant disposé de telle sorte que sa couche métallique (4, 4') soit tournée vers la couche métallique (2, 2') du premier film (1), de sorte que la couche métallique (2, 2') du premier film (1) et la couche métallique (4, 4') du deuxième film (3) ne soient séparées l'une de l'autre que par la mince couche (7) de diélectrique, **caractérisé en ce que** les deux films (1, 3) sont métallisés sur les deux faces et **en ce que** les deux films (1, 3) sont imprimés sur au moins une face avec une couche (7, 8) de diélectrique.

10. Procédé selon la revendication 9, **caractérisé en ce que** la couche constituée d'un diélectrique (7, 8) est imprimée sur la couche métallique (2, 2', 4, 4') d'un film au moyen d'un procédé d'impression, par exemple l'impression offset, la flexographie, l'héliogravure ou la sérigraphie.

11. Procédé selon la revendication 9 ou 10, **caractérisé en ce que** les deux films (1, 3) sont respectivement imprimés avec une couche diélectrique (7, 8).

**12.** Procédé selon au moins l'une des revendications 9 à 11, **caractérisé en ce qu'**au moins deux autres métallisations (9, 9', 10, 10') ainsi qu'au moins une autre couche (7', 7", 8', 8") de diélectrique situées entre celles-ci et sur celles-ci sont appliquées sur la couche (7, 8) de diélectrique.

## Fig. 1

Stand der Technik

## Fig. 2

**Fig. 3**

**Fig. 4**

**Fig. 5**

**Fig. 6**

# Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3016120 A1
- US 3855507 A
- WO 1999013157 A1